# FASCICULE DE BREVET EUROPEEN

(11) **EP 0 609 160 B1**
(45) Date de publication et mention de la délivrance du brevet: **20.03.1996**
(21) Numéro de dépôt: 94420021.1
(22) Date de dépôt: 25.01.1994
(51) Int. Cl.: C04B 41/85, C04B 41/89, C03C 8/14, C04B 41/50

(54) **Revêtements de protection des matériaux contre les réactions avec l'atmosphère à haute température**
Beschichtungen zum Materialschutz gegen Reaktionen mit der Atmosphäre bei hoher Temperatur
Coatings to protect materials against reactions with the atmosphere at high temperature

(30) Priorité: 28.01.1993 FR 9301258
(43) Date de publication de la demande: 03.08.1994
(73) Titulaire: PECHINEY RECHERCHE (Groupement d'Intérêt Economique géré par l'ordonnance du 23 Septembre 1967), F-92400 Courbevoie (FR)
(72) Inventeur: Morel, Bertrand, F-38340 Moirans (FR)
(74) Mandataire: Mougeot, Jean-Claude

(56) Documents cités:
- EP-A- 0 466 491
- WO-A-88/03519
- FR-A- 2 531 301
- US-A- 4 308 114
- DATABASE WPI Week 9022, Derwent Publications Ltd., London, GB; AN 90-169053 & JP-A-2 111 679 (TOKAI CARBON KK)
- PATENT ABSTRACTS OF JAPAN vol. 014, no. 439 (C-0761)1990 & JP-A-21 072 860 (TOSHIBA CERAMICS CO)
- DATABASE WPI Week 7935, Derwent Publications Ltd., London, GB; AN 79-63954B & JP-A-54 092 271 (CANON KK)
- DATABASE WPI Week 9022, Derwent Publications Ltd., London, GB; AN 90-169053 & JP-A-2 111 679
- PATENT ABSTRACTS OF JAPAN vol. 014, no. 439 (C-0761)1990 & JP-A-21 072 860
- DATABASE WPI Week 7935, Derwent Publications Ltd., London, GB; AN 79-63954B & JP-A-54 092 271

## Description

### DOMAINE TECHNIQUE

L'invention concerne des revêtements de protection des matériaux contre les réactions avec l'atmosphère à haute température. Elle concerne plus particulièrement des compositions à base de diborure de zirconium qui sont utilisables pour protéger de nombreux matériaux et en particulier le graphite et le carbone jusqu'à 1350°C.

### ETAT DE LA TECHNIQUE

Beaucoup de matériaux présentent l'inconvénient de réagir avec l'atmosphère ce qui limite ou même rend impossible leur utilisation à haute température. C'est le cas par exemple du carbone et du graphite. Ces matériaux s'oxydent très rapidement à la température de 500°C en formant du dioxyde de carbone. La durée de vie des creusets, électrodes et plus généralement des pièces en graphite ou carbone utilisées à haute température est considérablement raccourcie par ce phénomène d'oxydation.

Beaucoup de revêtements protecteurs ont été développés pour protéger les matériaux contre les réactions avec l'atmosphère à haute température. Suivant leur mécanisme d'action, les revêtements de l'art antérieur se classent en deux grandes familles.

La première concerne les revêtements visant à inhiber la réaction d'oxydation en empoisonnant les sites actifs. Ces revêtements connus depuis longtemps sont très souvent à base de phosphates ou de borates. Un simple traitement à l'acide phosphorique permet par exemple de retarder de 200°C environ l'oxydation du graphite. On peut citer également les compositions enseignées par les brevets US 1948382 et FR 1446038 L'amélioration apportée par les revêtements de ce type est réelle et permet de protéger efficacement des pièces jusqu'à 800°C environ. Au-delà la protection n'est plus efficace.

La deuxième famille concerne les revêtements qui, au lieu d'inhiber les sites d'oxydation, constituent une barrière à l'oxygène. Très souvent ces revêtements sont à base de silice (ou de produits comme le silicium et le carbure de silicium qui par oxydation donnent de la silice) qui a la propriété de peu diffuser l'oxygène à haute température. On peut citer comme revêtements de ce type les compositions enseignées par les brevets US 3164489 et JP 60155587. L'inconvénient des revêtements du type barrière à l'oxygène est qu'ils comportent des microfissures du fait des différences de coefficient de dilatation et des chocs thermiques. Ces microfissures, même de très petite taille, par exemple 100 A, entraînent des points d'oxydation qui s'étendent rapidement à l'ensemble du substrat sous-jacent malgré une apparente bonne tenue du revêtement.

Les meilleurs compromis de l'art antérieur se trouvent dans les revêtements combinant les deux mécanismes de protection. Ce sont les revêtements type barrière à l'oxygène mais dont les fissures sont étanchées par une phase liquide de type silice et/ou de type inhibiteur.

Le brevet US 4 711 666 enseigne par exemple une composition comportant du carbure de silicium, des phosphates et de la silice. La demande de brevet WO 88/03519 enseigne une composition comportant du diborure de titane et un composé de silice avec l'addition éventuelle d'un sel métallique. Ces compositions sont beaucoup plus performantes que les compositions des familles précédentes et permettent de protéger efficacement les matériaux jusqu'à 1000°C. Au-delà de cette température, l'efficacité de la protection diminue très rapidement. A 1300°C la protection est totalement inefficace et le substrat s'oxyde complètement avec ou sans revêtement.

La demanderesse s'est donnée comme objectif de mettre au point un revêtement qui protège efficacement les matériaux d'une réaction avec l'atmosphère jusqu'à 1350°C au moins.

### DESCRIPTION DE L'INVENTION

L'objet de l'invention est une composition destinée à protéger des matériaux contre les réactions avec l'atmosphère à haute température caractérisée en ce qu'elle comprend du diborure de zirconium et de la silice colloïdale. De préférence le ratio en poids entre le diborure de zirconium et la silice colloïdale est compris entre 1 et 9.

La composition suivant l'invention est généralement déposée directement sur le substrat à protéger. Dans certains cas cependant, pour améliorer l'adhésion de la composition au substrat, il est préférable de déposer préalablement sur le substrat une sous-couche d'adhésion. Il est dans ce cas avantageux d'utiliser pour cette sous couche des produits qui assurent la fonction d'adhésion et simultanément participent à la protection en ayant par exemple un effet inhibiteur d'oxydation. Un dépôt à base de phosphate de zinc ou d'aluminium est particulièrement indiqué pour cette double fonction.

La composition suivant l'invention est élaborée à partir de diborure de zirconium du commerce sans aucune exigence particulière sur le plan des impuretés. On utilise généralement une poudre fine de préférence de granulométrie 10 à 40 microns. La silice colloïdale est intimement mélangée au diborure.

La composition suivant l'invention peut être appliquée sur le substrat par tous les moyens habituellement utilisés pour des produits analogues: pinceau, spatule, pulvérisateur,... La protection est évidemment d'autant plus efficace que l'épaisseur du revêtement est élevée. De très bons résultats sont obtenus à partir de 35 mg/cm2.

La composition suivant l'invention se vitrifie entre 600 et 700°C. Pour obtenir une bonne efficacité de la protection, il est nécessaire que la vitrification soit rapide. Si la pièce revêtue doit elle-même être portée à haute température très rapidement (>300°/h) la vitrification du revêtement s'effectue dans de bonnes conditions pendant l'utilisation même de la pièce. Si, par contre, la pièce revêtue doit subir une montée lente en température, il est nécessaire de procéder à un prétraitement de vitrification. Le prétraitement de vitrification peut avantageusement être effectué au chalumeau. Un tel mode de cuisson conduit à un dépôt inhomogène en épaisseur. Le verre ne se forme qu'à la surface et il reste entre le substrat et la surface une couche non liée. Cette couche absorbe les différences de coefficient de dilatation quand la pièce est soumise à des chocs thermiques. Un prétraitement typique est une montée en température à 300°C/heure jusqu'à 1000°C, maintien de 15 minutes à 1000° et refroidissement à l'air libre. Une fois refroidie, la pièce est disponible pour l'usage auquel elle est destinée.

Les performances de la composition suivant l'invention tiennent aux propriétés étonnantes de la combinaison diborure de zirconium et silice colloïdale. De nombreux essais effectués avec la combinaison diborure de titane et silice colloïdale de l'art antérieur ont montré que le revêtement perd son efficacité à partir de 1000°C pour devenir totalement inefficace à 1300°C. Cette perte d'efficacité à haute température est due à un taux de conversion trop élevé du diborure de titane en oxyde. La transformation en oxyde entraîne un abaissement du point de fusion du verre et une modification du coefficient de dilatation du dépôt qui sont dommageables pour la protection. Pour améliorer les performances à très haute température de la combinaison de l'art antérieur, l'homme du métier est donc conduit à substituer au diborure de titane un autre borure qui s'oxyde moins que celui-ci à haute température.

De très nombreux borures ont déjà été utilisés combinés à d'autres produits pour élaborer des revêtements de protection. On peut citer entre autres les borures de nickel, de chrome, de lanthane, de calcium et le diborure de zirconium. Cherchant parmi tous ces borures un borure qui s'oxyde moins que le diborure de titane, l'homme du métier est conduit à rejeter immédiatement le diborure de zirconium. En effet, comme l'indique le tableau 1, le diborure de zirconium s'oxyde à l'air plus facilement encore que le diborure de titane à la température de 1200°.

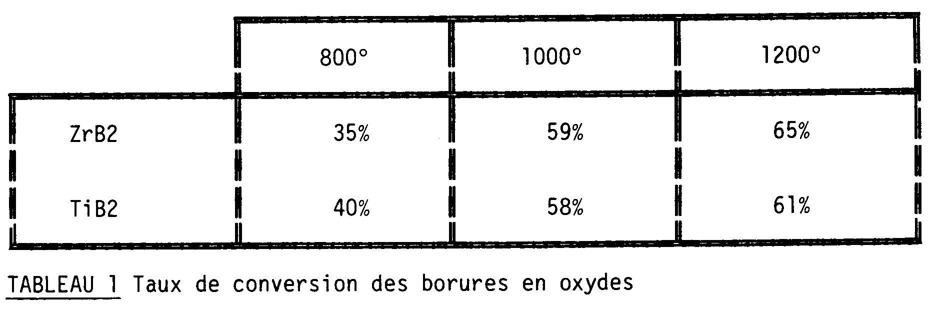

Les excellents résultats obtenus cependant en substituant le diborure de zirconium au diborure de titane sont dûs à un phénomène inattendu. Alors que les deux diborures ont des taux d'oxydation à haute température tout à fait voisins quand ils sont testés isolément, ces mêmes diborures associés à la silice colloïdale se comportent d'une manière tout à fait différente vis à vis de l'atmosphère à haute température. Une fois associés à la silice colloïdale, le diborure de zirconium s'oxyde quatre fois moins que le diborure de titane. Le tableau 2 donne les pourcentages de borure convertis en oxyde après 5h à 1200°C pour deux revêtements: un revêtement suivant l'art antérieur composé de 45% de TiB₂, 25% de SiO₂ et 30% de SiC et un revêtement suivant l'invention composé de 45% de ZrB₂, 25% de SiO₂ et 30% de SiC.

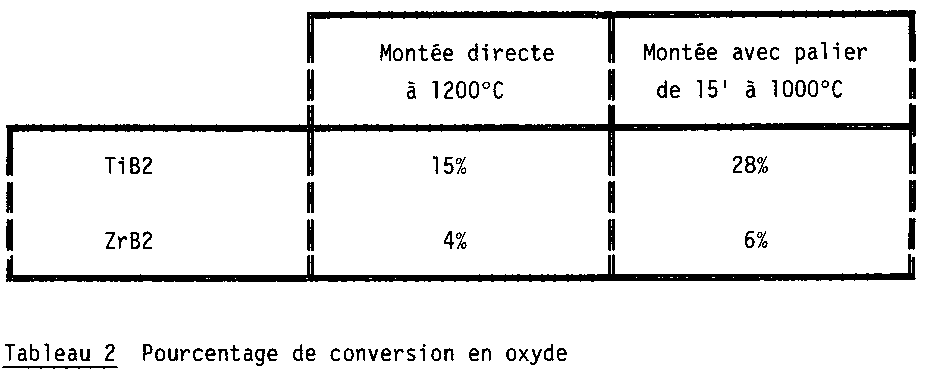

Le comportement étonnant à l'oxydation du diborure de zirconium quand il est combiné à la silice colloïdale ne se retrouve pas quand il est combiné à d'autres composés de silice. De nombreux essais effectués avec de la fumée de silice ou de la silice en poudre ont été totalement négatifs. Seule, la silice colloïdale par un phénomène pour le moment inexpliqué permet de limiter l'oxydation du diborure de zirconium et de ce fait, confère au revêtement suivant l'invention un pouvoir protecteur très supérieur à celui des revêtements de l'art antérieur.

La composition suivant l'invention se comporte également d'une manière étonnante pour ce qui concerne l'adhésion au substrat. Des tests comparatifs ont été réalisés avec des revêtements de l'art antérieur (à base de diborure de titane) et des revêtements selon l'invention (à base de diborure de zirconium). Le test consiste à coller deux éprouvettes de graphite avec le dépôt à étudier et à mesurer après recuit la contrainte d'arrachement par traction. Alors que les revêtements de l'art antérieur donnent des résultats autour de 2 MPa, les revêtements suivant l'invention atteignent jusqu'à 6,7 MPa. Cette amélioration d'un facteur 3 d'une propreté essentielle des revêtements n'a pu pour le moment être expliquée.

La composition suivant l'invention peut également comporter, outre le mélange de base constitué de diborure de zirconium et de silice colloïdale, des additifs destinés à modifier les propriétés physiques de l'ensemble du revêtement. En fonction de la nature du substrat à protéger, il est souhaitable, par exemple, pour optimiser les résultats de modifier dans un sens ou dans l'autre le coefficient de dilatation du revêtement. De même, pour mieux adapter la composition au mode d'utilisation prévu (pinceau, pulvérisateur...) il est possible de modifier par un additif sa rhéologie. Plus prosaïquement, il peut être intéressant de diminuer le coût du revêtement en ajoutant une charge inerte beaucoup moins chère.

Les additifs utilisés sont choisis parmi les produits qui ont un effet négligeable ou nul sur le phénomène majeur de la vitrification du mélange diborure de zirconium et silice colloïdale qui constitue le coeur de l'invention. L'addition de fondants comme l'oxyde de bore ou les silicates d'alcalins est par exemple déconseillée car ils abaissent la température de fusion du verre. Les additifs utilisés sont très variés, on peut citer par exemple l'alumine, la silice en poudre et le nitrure de bore. Un des additifs les plus utilisés est le carbure de silicium. Le carbure de silicium a l'avantage d'être considérablement moins cher que le diborure de zirconium. Il a un coefficient de dilatation voisin de celui du graphite. Il a l'avantage d'augmenter la résistance à l'abrasion du revêtement. L'ajout est cependant limité à 40% en poids de l'ensemble. Au-delà de 40%, on constate une augmentation de la porosité du revêtement et une diminution corrélative de ses performances.

Avec ou sans additifs, déposé directement ou sur une sous-couche, la composition suivant l'invention permet une protection efficace jusqu'à 1350°C de la plupart des matériaux: métaux, céramiques, composites, graphite, carbone...

### Exemple 1

On a préparé 10 échantillons de graphite de diamètre 25 mm et de hauteur 30 mm dont les arêtes ont été limées. Le graphite était un graphite de qualité ordinaire ayant un coefficient de dilatation de 3 10⁻⁶ degrés C ⁻¹. Tous les échantillons ont été préalablement dégraissés à l'acétone.

Cinq échantillons ont été revêtus au pinceau d'un dépôt constitué d'une composition conforme à l'invention et comportant 45% de diborure de zirconium, 25% de silice colloïdale et 30% de carbure de silicium. Les cinq autres échantillons ont été revêtus au pinceau d'un dépôt constitué par une composition suivant l'art antérieur et comportant 45% de diborate de titane, 25% de silice colloïdale et 30% de carbure de silicium.

Les deux séries d'échantillons revêtus ont été séchés une première fois à l'étuve pendant 15 minutes à 120°C après avoir reçu une première couche puis une deuxième fois dans les mêmes conditions après avoir reçu une deuxième couche. Le revêtement total pour chacun des 10 échantillons correspondait à une épaisseur de 60 mg/cm2.

Les 10 échantillons une fois revêtus ont subi un prétraitement par montée directe à 1000° à la vitesse de 300°C/heure, maintien de 15 minutes à 1000°C et refroidissement à l'air libre.

Chacun des échantillons a été pesé et les 10 échantillons ont été soumis à un traitement de 5 h à 1000°C avec balayage d'air. Après refroidissement les échantillons ont été examinés et pesés. Tous les échantillons étaient en parfait état et ne présentaient ni déterioration ni perte de poids.

Ces mêmes échantillons ont été réintroduits dans le four et soumis à un deuxième cycle thermique avec maintien de 5 h à 1350°C. Après refroidissement, on a constaté que les cinq échantillons revêtus de la composition à base de diborure de titane de l'art antérieur présentaient tous des revêtements déteriorés et une perte de poids variant de 30 à 40%. Les cinq échantillons revêtus de la composition suivant l'invention n'étaient pas déteriorés et accusaient une perte de poids inférieure à 2%.

### Exemple 2

Dix échantillons de forme cubique (2 cm x 2 cm x 2 cm) ont été prélevés dans du graphite relativement dense destiné à la fabrication de creusets. Le coefficient de dilatation de ce graphite était de 6 10⁻⁶ degrés C ⁻¹.

Ces dix échantillons ont été revêtus au pinceau d'une composition suivant l'invention contenant 90% de diborure de zirconium et 10% de silice colloïdale. L'épaisseur du revêtement était de 45 mg/cm2. Le revêtement a été simplement séché à l'étuve et les échantillons n'ont suvi aucun prétraitement.

Les dix échantillons ont été soumis à un cycle thermique représentatif de l'utilisation industrielle des creusets: montée à 1200°C à une vitesse moyenne de 300°C/heure puis maintien à 1200°C pendant dix heures.

Après refroidissement à l'air libre, les échantillons ont été examinés et pesés. Aucun des échantillons ne présentait une perte de poids supérieur à 2% et l'état du revêtement sur les échantillons était toujours excellent.

### Exemple 3

Dix échantillons de composite carbone/carbone utilisés pour les freins d'avion ont été préparés sous forme de parallélépipèdes 4 cm x 4 cm x 0,5 cm. Le composite carbone carbone présentait la particularité d'avoir des coefficients de dilatation variables suivant la direction: 1.10⁻⁶ degré C⁻¹ en x, y et 8.10⁻⁶ degré C ⁻¹ en z.

Cinq échantillons ont été revêtus de deux couches d'une composition suivant l'invention et comprenant 45% de diborure de zirconium, 25% de silice colloïdale et 30% de carbure de silicium. Le revêtement total correspondait à une épaisseur de 60 mg/cm2.

Cinq autres échantillons ont été successivement revêtus d'une première couche de phosphate de zinc d'épaisseur 5 mg/cm2 et d'une deuxième couche de la même composition que celle utilisée pour les échantillons précédents c'est-à-dire comprenant 45% de diborure de zirconium, 25% de silice colloïdale et 30% de carbure de silicium. La deuxième couche avait une épaisseur de 40 mg/cm2.

Les dix échantillons revêtus ont subi un prétraitement par montée directe à 1000°C à la vitesse de 300°C/heure, maintien de 15 minutes à 1000°C et refroidissement à l'air libre.

Les dix échantillons ont ensuite été introduits dans un four et soumis à un traitement de 5 h à 900°C avec un balayage d'air. A la fin du traitement, les dix échantillons ont été refroidis à l'air libre puis examinés et pesés.

Les cinq échantillons ne comportant pas de sous couche à base de phosphate de zinc accusaient une perte de poids de 40 à 50%, bien que le revêtement soit resté en excellent état. Le revêtement était simplement décollé du substrat et le carbone sous-jacent s'était oxydé à l'air.

Les cinq échantillons comportant la sous-couche à base de phosphate de zinc étaient intacts et accusaient des pertes de poids négligeables toutes inférieures à 2%.

## Revendications

1. Composition destinée à protéger les matériaux contre les réactions avec l'atmosphère à haute température caractérisé en ce qu'elle contient du diborure de zirconium et de la silice colloïdale.

2. Composition suivant la revendication 1 caractérisée en ce que le ratio en poids entre le diborure de zirconium et la silice colloïdale est compris entre 1 et 9.

3. Composition suivant l'une quelconque des revendications 1 et 2 caractérisée en ce qu'elle contient en outre du carbure de silicium.

4. Composition suivant la revendication 3 caractérisée en ce qu'elle contient jusqu'à 40% en poids de carbure de silicium.

5. Procédé de protection des matériaux contre l'action de l'atmosphère à haute température caractérisé en ce que un revêtement constitué d'une composition suivant l'une quelconque des revendications 1 à 4 est directement déposé sur le matériau à protéger.

6. Procédé de protection des matériaux contre l'action de l'atmosphère à haute température caractérisé en ce que on dépose sur le matériau successivement une sous couche destinée à faciliter l'adhésion et un revêtement constitué d'une composition suivant l'une quelconque des revendications 1 à 4.

7. Procédé suivant la revendication 6 caractérisé en ce que la sous couche destinée à faciliter l'adhésion est à base de phosphate de zinc ou d'aluminium.

## Claims

1. A composition for protecting materials against reactions with the atmosphere at high temperatures, characterised in that the composition contains zirconium diboride and colloidal silica.

2. A composition according to claim 1, characterised in that the ratio by weight of zirconium diboride to colloidal silica is between 1 and 9.

3. A composition according to claim 1 or 2, characterised in that it also contains silicon carbide.

4. A composition according to claim 3, characterised in that it contains up to 40% by weight of silicon carbide.

5. A method of protecting materials against the action of the atmosphere at high temperatures, characterised in that a coating consisting of a composition according to any of claims 1 to 4 is directly deposited on to the material to be protected.

6. A method of protecting materials against the action of the atmosphere at high temperatures, characterised in that an underlayer for facilitating adhesion and a coating consisting of a composition according to any of claims 1 to 4 are successively deposited on to the material.

7. A method according to claim 6, characterised in that the underlayer for facilitating adhesion is based on zinc phosphate or alumimium phosphate.

## Patentansprüche

1. Zusammensetzung, die für den Schutz von Materialien vor Reaktionen mit der Atmosphäre bei hoher Temperatur vorgesehen ist,
dadurch gekennzeichnet, daß
sie Zirconiumdiborid und kolloidales Siliciumdioxid enthält.

2. Zusammensetzung nach Anspruch 1, dadurch gekennzeichnet, daß das Gewichtsverhältnis Zirconiumdiborid/kolloidales Siliciumdioxid 1 bis 9 beträgt.

3. Zusammensetzung nach einem der Ansprüche 1 und 2, dadurch gekennzeichnet, daß sie außerdem Siliciumcarbid enthält.

4. Zusammensetzung nach Anspruch 3, dadurch gekennzeichnet, daß sie bis zu 40 Gew.-% Siliciumcarbid enthält.

5. Verfahren zum Schutz von Materialien gegen die Einwirkung der Atmosphäre bei hoher Temperatur, dadurch gekennzeichnet, daß unmittelbar auf dem zu schützenden Material ein aus einer Zusammensetzung nach einem der Ansprüche 1 bis 4 bestehender Überzug aufgebracht wird.

6. Verfahren zum Schutz von Materialien gegen die Einwirkung der Atmosphäre bei hoher Temperatur, dadurch gekennzeichnet, daß auf dem Material nacheinander eine Zwischenschicht, die die Haftung erleichtern soll, und ein Überzug, der aus einer Zusammensetzung nach einem der Ansprüche 1 bis 4 besteht, aufgebracht werden.

7. Verfahren nach Anspruch 6, dadurch gekennzeichnet, daß die Zwischenschicht, die die Haftung erleichtern soll, eine Schicht auf Zinkphosphat- oder Aluminiumphosphatbasis ist.
